# EUROPÄISCHE PATENTANMELDUNG

(11) **EP 0 916 888 A1**
(43) Veröffentlichungstag der Anmeldung: **19.05.1999**
(21) Anmeldenummer: 98118863.4
(22) Anmeldetag: 06.10.1998
(51) Int. Cl.: F16L 21/06, H02G 9/06

(54) **Rohrkupplung**

(30) Priorität: 06.11.1997 DE 19749087
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(57) **Zusammenfassung**

Es handelt sich um eine Rohrkupplung für Kabelschutzrohre. Die Rohrkupplung besteht aus einem Kupplungsrohr, welches durch Längsteilung in zwei Halbschalen mit randseitigen Verbindungsflanschen unterteilt ist. In das Kupplungsrohr sind Sicherungsschellen für die zu verbindenden Kabelschutzrohrenden eingesetzt. Die Verbindungsflansche weisen in vorgegebenen Abständen Verbindungsschrauben auf. Außerdem können die Kabelschutzrohrenden mit Dichtmasse ummantelt sein und zwischen den Verbindungsflanschen der Halbschalen Dichtungsleisten angeordnet sein, so daß eine druckdichte Reparatur-Rohrschelle für belegte Kabelschutzrohre verwirklicht ist.

## Beschreibung

Die Erfindung betrifft eine Rohrkupplung für die Verbindung von zwei Kunststoffrohren, insbesondere zum Ersetzen eines einem Kabelschutzrohrstrang für Nachrichtenkabel im Zuge von Reparaturarbeiten über eine vorgegebene Reparaturlänge entnommenen Kabelschutzrohrabschnitts.

In der Nachrichtentechnik und insbesondere in der Telekommunikation finden zur Signalübertragung Nachrichtenkabel Verwendung, bei denen es sich um Koaxialkabel oder in zunehmenden Maße um Glasfaserkabel als Lichtwellenleiter handelt. Derartige Nachrichtenkabel werden regelmäßig in Kabelschutzrohren verlegt. Sofern beispielsweise Reparaturarbeiten anfallen, muß der Kabelschutzrohrstrang im Bereich der Reparaturstelle geöffnet werden. Dazu wird aus dem Kabelschutzrohrstrang ein Kabelschutzrohrabschnitt herausgetrennt und entnommen. Nach Erledigung der Reparaturarbeiten wird ein entsprechender Kabelschutzrohrabschnitt in den Kabelschutzrohrstrang wieder eingesetzt. Häufig muß eine druckluftbeaufschlagbare Verbindung hergestellt werden. Eine derartige Rohrverbindung bereitet insbesondere in montagetechnischer Hinsicht Schwierigkeiten. - Man hat sich auch schon mit einer Klebebandabwicklung der zu verbindenden Kabelschutzrohrenden beholfen. Eine derartige Klebebandabwicklung ist jedoch ein Provisorium und insbesondere nicht längskraft- und druckluftfest.

Der Erfindung liegt die Aufgabe zugrunde, eine Rohrkupplung der eingangs beschriebenen Ausführungsform zu schaffen, welche eine in montagetechnischer Hinsicht einfache und schnelle sowie darüber hinaus funktionsgerechte Verbindung von Kunststoffrohren und insbesondere der Rohrenden von Kabelschutzrohren ermöglicht und sich ferner durch hinreichende Innendruckfestigkeit und Längskraftfestigkeit auszeichnet.

Zur Lösung dieser Aufgabe ist die gattungsgemäße Rohrkupplung gekennzeichnet durch
a) ein Kupplungsrohr mit einem den Kabelschutzrohraußendurchmesser um ein vorgegebenes Maß übersteigenden Kupplungsrohrinnendurchmesser, wobei das Kupplungsrohr durch Längsteilung in zwei Halbschalen mit randseitigen Verbindungsflanschen unterteilt ist,
b) in das Kupplungsrohr eingesetzte Sicherungsschellen für die zu verbindenden Kabelschutzrohrenden,
wobei die Verbindungsflansche in vorgegebenen Abständen und die Sicherungsschellen fluchtende Durchbrechungen zum Hindurchführen von Verbindungsschrauben aufweisen. - Diese Maßnahmen der Erfindung haben zur Folge, daß eine mechanische Rohrverbindung verwirklicht wird, die sich durch hohe Innendruckfestigkeit und Längskraftfestigkeit auszeichnet. Innendruckfestigkeit meint, daß der Kabelschutzrohrstrang nach dem Ersetzen eines zuvor entnommenen Kabelschutzrohrabschnitts unverändert mit Druckluft beaufschlagt werden kann. Längskraftfestigkeit meint, daß der Kabelschutzrohrstrang auch im Bereich der Verbindungsstelle zwischen den beiden Kabelschutzrohrenden einer hinreichend hohen Längskraftbeanspruchung unterworfen werden kann, ohne daß im Bereich der Verbindungsstelle eine Kabelschutzrohrtrennung zu befürchten ist. Tatsächlich erfüllt die erfindungsgemäße Rohrkupplung selbst die Funktion einer Rohrverbindung für die beiden Enden des im Reparaturbereich unterbrochenen Kabelschutzrohrstranges. Die Innendruckfestigkeit und Längskraftfestigkeit können mittels der Sicherungsschellen, Halbschalen und Verbindungsschrauben unschwer auf die jeweils verlangten Werte eingestellt werden. Von besonderem Vorteil ist die Tatsache, daß die erfindungsgemäße Rohrkupplung auch bei mit Nachrichtenkabeln belegten Kabelschutzrohren eingesetzt werden.

Weitere erfindungswesentliche Maßnahmen sind im folgenden aufgeführt. So lehrt die Erfindung, daß auf die Kabelschutzrohrenden Kabeleinführungshülsen aufsetzbar, z.B. aufspreizbar, sind. Derartige Kabeleinführungshülsen erleichtern das Einziehen von Nachrichtenkabeln in die Kabelschutzrohre und erübrigen eine sonst erforderliche Entgratung und Anfasung der Kabelschutzrohrenden, die zur Vermeidung von Beschädigungen dienen. Bei bereits mit Nachrichtenkabeln belegten Kabelschutzrohren werden die Kabeleinführungshülsen auf die Kabelschutzrohrenden aufgespreizt und verhindern die Bildung von Knickstellen und daraus resultierende Beschädigungen der Nachrichtenkabel beim Eintreten in die Kabelschutzrohrenden. Aus diesem Grunde weisen die Kabeleinführungshülsen einen stirnseitig gegen die Kabelschutzrohrenden anliegenden Anschlagring auf, der eine konische Kabeleinführung besitzt. Der Anschlagring ermöglicht darüber hinaus eine einwandfreie Montage der Kabeleinführungshülsen. Die Kabeleinführungshülsen weisen zum Aufspreizen zweckmäßigerweise einen Längsschlitz auf und bestehen aus biegeelastischem Material, z.B. Kunststoff.

Nach einem besonderen Vorschlag der Erfindung ist vorgesehen, daß die Kabelschutzrohrenden von einem sich an die Kabeleinführungshülsen anschließenden Dichtmassemantel umgeben sind, der beispielsweise bündig an die Kabeleinführungshülsen anschließt und mit leichter Überlappung geklebt werden kann. Denn dieser Dichtmassemantel besteht regelmäßig aus einem wickelbaren Dichtmasseband vorgegebener Breite mit einem beidseitig abziehbaren Abdeckpapier, welches abziehbar ist. Dieser Dichtmassemantel und - nach einem weiteren Vorschlag der Erfindung - auf der Innenseite der Verbindungsflansche zumindest einer Halbschale angeordnete Dichtungsstreifen, z.B. Profildichtungsstreifen aus Gummi, die von den Verbindungsschrauben durchdrungen sind, sorgen für eine nicht nur druckfeste, sondern auch druckdichte Rohrverbindung. Denn die verbundenen Kabelschutzrohrenden werden mittels der Dichtmassemäntel gegen die Halbschalen im Bereich des Kabelschutzrohrinnendurchmessers abgedichtet, während die Abdichtung der Halbschalen und folglich der Rohrkupplung gegen das Umfeld mittels der zwischen den Verbindungsflanschen verpreßten Dichtungsstreifen gelingt. - Die Verbindungsflansche können auf ihrer Außenseite adhäsiv befestigte, z.B. aufgeklebte, Verstärkungsleisten aufweisen, um die Innendruckfestigkeit und Längskraftfestigkeit zu optimieren. Denn das verlangt eine sichere Verankerung der Verbindungsschrauben, welche kopfseitig einen Mehrkantansatz aufweisen, so daß bei in die Durchbrechungen bzw. Bohrungen der Verbindungsflansche eingesetzten Verbindungsschrauben ein drehsicherer Sitz gewährleistet ist und folglich nur noch die zugehörigen Muttern mit Unterlegscheibe aufgedreht werden müssen. Endlich sieht die Erfindung vor, daß die Sicherungsschellen, die vorzugsweise aus korrosionsbeständigem Stahl bestehen und sich unmittelbar an den Dichtmassemantel anschließen, innenseitige Fixierungsnocken für die Kabelschutzrohrenden aufweisen, weil diese Fixierungsnocken sich beim Schließen der Sicherungsschellen in den Kabelschutzrohrmantel eindrücken.

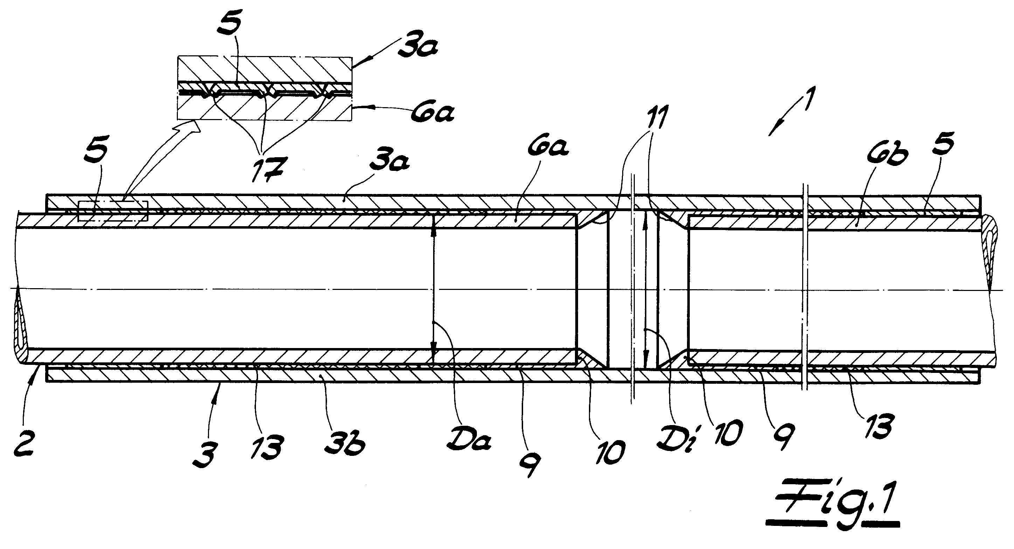

Im folgenden wird die Erfindung anhand einer lediglich ein Ausführungsbeispiel darstellenden Zeichnung näher erläutert; es zeigen
- Fig. 1: eine erfindungsgemäße Rohrkupplung im Längsschnitt mit zwei verbundenen Kabelschutzrohrenden,

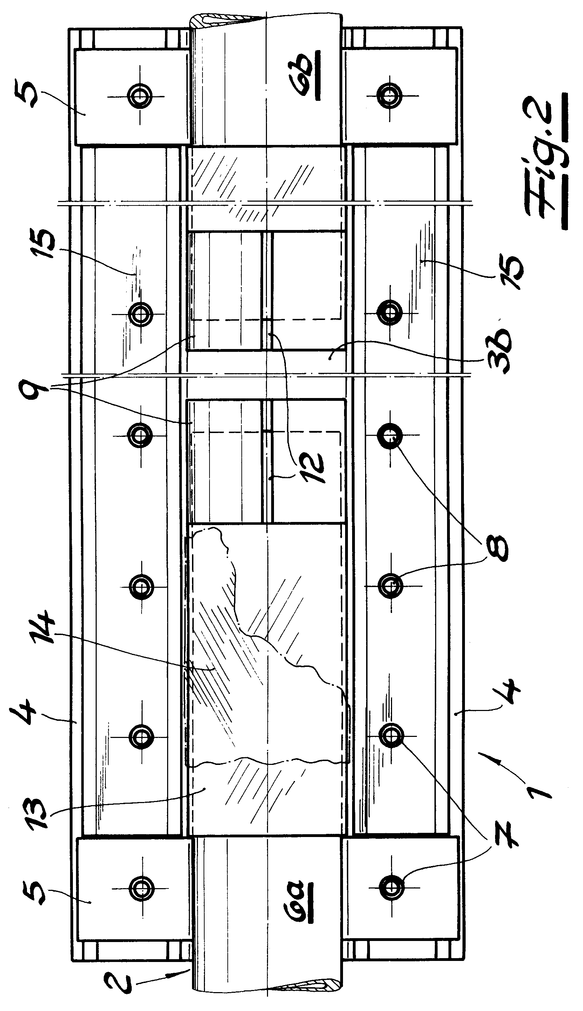

- Fig. 2: eine Draufsicht auf den Gegenstand nach Fig. 1 bei abgenommener oberer Halbschale,

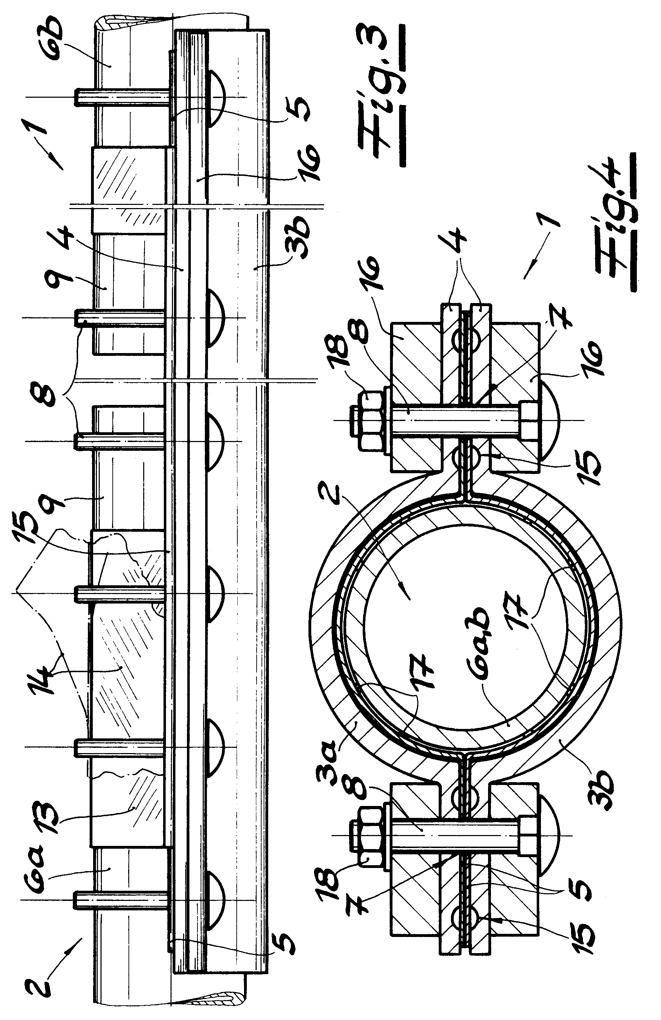

- Fig. 3: eine Seitenansicht auf den Gegenstand nach Fig. 2,

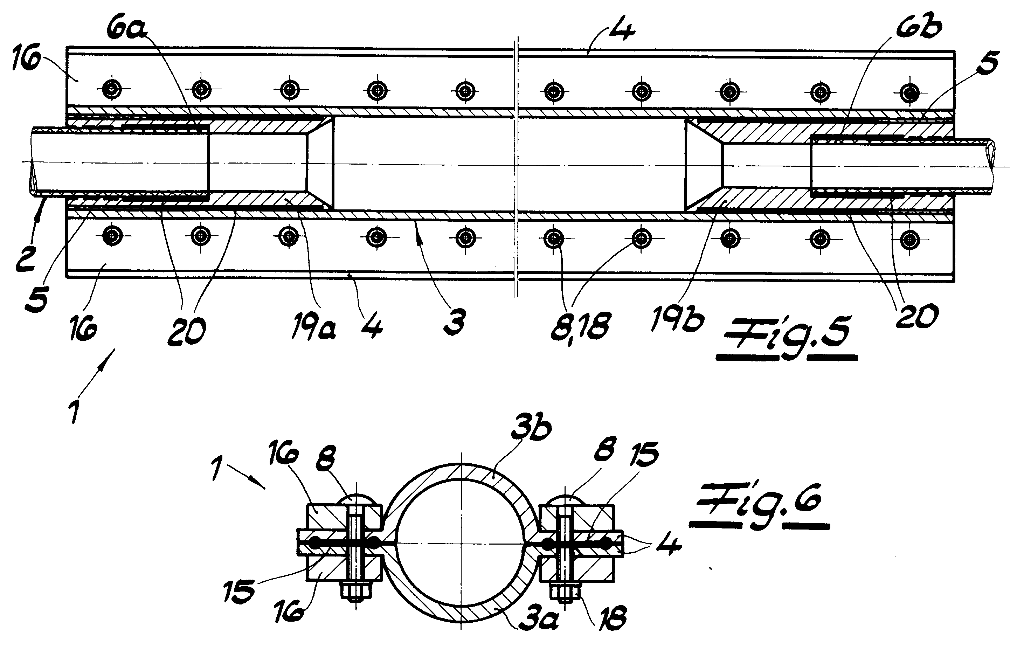

- Fig. 4: einen Querschnitt durch den Gegenstand nach Fig. 1 im Bereich einer Sicherungsschelle,
- Fig. 5: eine abgewandelte Ausführungsform des Gegenstandes nach Fig. 2 mit Reduzierhülsen und
- Fig. 6: einen Querschnitt durch den Gegenstand nach Fig. 1 zwischen den Kabelschutzrohrenden.

In den Figuren ist eine Rohrkupplung 1 für die Verbindung von zwei Kunststoffrohren und insbesondere zum Ersetzen eines einem Kabelschutzrohrstrang 2 für Nachrichtenkabel im Zuge von Reparaturarbeiten über eine vorgegebene Reparaturlänge entnommenen Kabelschutzrohrabschnitts dargestellt. Diese Rohrkupplung weist ein Kupplungsrohr 3 mit einem den Kabelschutzrohraußendurchmesser Da um ein vorgegebenes Maß übersteigenden Kupplungsrohrinnendurchmesser Di auf, wobei das Kupplungsrohr durch Längsteilung in zwei Halbschalen 3a, 3b mit randseitigen Verbindungsflanschen 4 unterteilt ist. Ferner sind in das Kupplungsrohr 3, und zwar vorzugsweise im Bereich der Rohrenden, Sicherungsschellen 5 für die zu verbindenden Kabelschutzrohrenden 6a, 6b eingesetzt. Die Verbindungsflansche 4 weisen in vorgegebenen Abständen ebenso wie die Sicherungsschellen 5 fluchtende Durchbrechungen 7 bzw. Bohrungen zum Hindurchführen von Verbindungsschrauben 8 auf. Auf die Kabelschutzrohrenden 6a, 6b sind Kabeleinführungshülsen 9 aufgespreizt. Die Kabeleinführungshülsen 9 weisen einen stirnseitig gegen die Kabelschutzrohrenden 6a, 6b anliegenden Anschlagring 10 auf, der eine konische Kabeleinführung 11 besitzt. Die Kabeleinführungshülsen 9 besitzen einen Längsschlitz 12 und bestehen aus biegeelastischem Kunststoff, damit sie auf die Kabelschutzrohrenden 6a, 6b aufgespreizt werden können. Die Kabelschutzrohrenden 6a, 6b sind von einem sich an die Kabeleinführungshülsen 9 anschließenden Dichtmassemantel 13 umgeben. Bei dem Dichtmassemantel 13 handelt es sich um ein wickelbares Dichtmasseband vorgegebener Breite mit einem abziehbaren Abdeckpapier 14. Der Kupplungsrohrinnendurchmesser Di übersteigt den Kabelschutzrohraußendurchmesser Da um jenes Maß, welches erforderlich ist, außer den Kabelschutzrohrenden 6a, 6b auch die sie umgebenden Sicherungsschellen 5, Dichtmassemäntel 13 und Kabeleinführungshülsen 9 einwandfrei unterbringen zu können. Die Sicherungsschellen 5 schließen sich unmittelbar an die Dichtmassemäntel 13 an, so daß die Dichtmassemäntel 13 von einerseits den Kabeleinführungshülsen 9 und andererseits den Sicherungsschellen 5 begrenzt sind.

Auf der Innenseite der Verbindungsflansche 4 zumindest einer Halbschale 3b - nach dem Ausführungsbeispiel der unten liegenden Halbschale 3b - sind Dichtungsstreifen 15, z.B. Profildichtungsstreifen aus Gummi, angeordnet, die wie die Verbindungsflansche 4 von den Verbindungsschrauben 8 durchdrungen sind. Die Verbindungsflansche 4 weisen auf ihrer Außenseite adhäsiv befestigte, z.B. aufgeklebte, Verstärkungsleisten 16 für eine einwandfreie Verankerung der Verbindungsschrauben 8 auf, die kopfseitig einen Mehrkantansatz aufweisen können, um eine drehsichere Anordnung zu gewährleisten. - Die Sicherungsschellen 5 besitzen innenseitige Fixierungsnocken 17 für die Kabelschutzrohrenden 6a, 6b und bestehen aus korrosionsbeständigem Stahl. Die Halbschalen 3a, 3b bestehen ebenso wie die Verstärkungsleisten 16 aus Kunststoff.

Im Zuge der Montage einer erfindungsgemäßen Rohrkupplung 1 wird der beschädigte Rohrabschnitt aus dem Kabelschutzrohrstrang 2 herausgetrennt. Es werden dann die Kabeleinführungshülsen 9 über die gebildeten Kabelschutzrohrenden 6a, 6b gespreizt und bis zum Anschlagring 10 aufgeschoben. Anschließend werden die Dichtmassemäntel 13 um die Kabelschutzrohrenden 6a, 6b mit bündigem Anschlag an die Kabeleinführungshülsen überlappend geklebt und das Abdeckpapier 14 entfernt. Es erfolgt dann der Einsatz der unteren Halbschale 3b mit den eingelegten Dichtungsstreifen 15 auf den Verbindungsflanschen 4, den unteren Hälften der Sicherungsschellen 5 und den drehsicher eingesetzten Verbindungsschrauben 8 von unten gegen beide Kabelschutzrohrenden 6a, 6b. Dann wird die obere Halbschale 3a spiegelbildlich auf die untere Halbschale 3b aufgesetzt, nachdem die oberen Hälften der Sicherungsschellen 5 auf den unteren Hälften fixiert worden sind. Beim Zusammensetzen der Halbschalen 3a, 3b werden die Schraubenschäfte der Verbindungsschrauben 8 sichtbar, so daß sich Unterlegscheiben leicht auffädeln und Schraubenmuttern 18 leicht andrehen lassen. Anschließend werden die Schraubenmuttern 18 mittels eines Schlagschraubers wechselweise mit einem vorgegebenen Drehmoment angezogen, um ein Verlaufen der Dichtungsmasse zu verhindern. Nach etwa 15 Minuten erfolgt ein nochmaliges Anziehen zumindest der äußeren Schraubenmuttern. - Im Rahmen der Erfindung lassen sich auch mehrere Rohrkupplungen 1 hintereinander zum Übebrücken größerer Schadensstrecken einsetzen.

Die erfindungsgemäße Rohrkupplung 1 ist auch für die Verbindung von Kabelschutzrohrenden 6a, 6b mit unterschiedlichen Rohrdurchmessern geeignet. In einem solchen Fall werden zwischen dem Kupplungsrohr 3 bzw. seinen Halbschalen 3a, 3b und einem oder beiden zu verbindenden Kabelschutzrohrenden 6a, 6b Reduzierhülsen 19a, 19b eingesetzt. Es kann allerdings auch der Fall vorkommen, daß nur eine Reduzierhülse 19a bzw. 19b erforderlich ist, wenn das eine Kabelschutzrohrende 6a oder 6b aufgrund seines Außendurchmessers die Zwischenschaltung einer Reduzierhülse 19a oder 19b nicht verlangt, während diese Reduzierhülse 19a oder 19b für das andere Kabelschutzrohrende 6a oder 6b mit reduziertem Außendurchmesser erforderlich ist. Zweckmäßigerweise ist zwischen dem Kupplungsrohr 3 und der oder den Reduzierhülsen 19a, 19b sowie zwischen der oder den Reduzierhülsen 19a, 19b und dem oder den Kabelschutzrohrenden 6a, 6b jeweils Dichtmasse, z.B. ein Dichtmassemantel 20 vorgesehen, um eine wasserdichte und um ein vorgegebenes Maß durckluftdichte Rohrkupplung zu verwirklichen.

## Patentansprüche

1. Rohrkupplung für die Verbindung von zwei Kunststoffrohren, insbesondere zum Ersetzen eines einem Kabelschutzrohrstrang für Nachrichtenkabel im Zuge von Reparaturarbeiten über eine vorgegebene Reparaturlänge entnommenen Kabelschutzrohrabschnitts, **gekennzeichnet durch**
a) ein Kupplungsrohr (3) mit einem den Kabelschutzrohraußendurchmesser (Da) um ein vorgegebenes Maß übersteigenden Kupplungsrohrinnendurchmesser (Di), wobei das Kupplungsrohr (3) durch Längsteilung in zwei Halbschalen (3a, 3b) mit randseitigen Verbindungsflanschen (4) unterteilt ist,
b) in das Kupplungsrohr (3) eingesetzte Sicherungsschellen (5) für die zu verbindenden Kabelschutzrohrenden (6a, 6b),
wobei die Verbindungsflansche (4) in vorgegebenen Abständen und die Sicherungsschellen (5) fluchtende Durchbrechungen (7) zum Hindurchführen von Verbindungsschrauben (8) aufweisen.

2. Rohrkupplung nach Anspruch 1, dadurch gekennzeichnet, daß auf die Kabelschutzrohrenden (6a, 6b) Kabeleinführungshülsen (9) aufsetzbar, z.B. aufspreizbar, sind.

3. Rohrkupplung nach Anspruch 1 oder 2, dadurch gekennzeichnet, daß die Kabeleinführungshülsen (9) einen stirnseitig gegen die Kabelschutzrohrenden (6a, 6b) anliegenden Anschlagring (10) aufweisen, der eine konische Kabeleinführung (11) besitzt.

4. Rohrkupplung nach einem der Ansprüche 1 bis 3, dadurch gekennzeichnet, daß die Kabeleinführungshülsen (9) einen Längsschlitz (12) aufweisen und aus biegeelastischem Material, z.B. Kunststoff, bestehen.

5. Rohrkupplung nach einem der Ansprüche 1 bis 4, dadurch gekennzeichnet, daß die Kabelschutzrohrenden (6a, 6b) von einem sich an die Kabeleinführungshülsen (9) anschließenden Dichtmassemantel (13) umgeben sind.

6. Rohrkupplung nach einem der Ansprüche 1 bis 5, dadurch gekennzeichnet, daß der Dichtmassemantel (13) aus einem wickelbaren Dichtmasseband vorgegebener Breite mit einem abziehbaren Abdeckpapier (14) besteht.

7. Rohrkupplung nach einem der Ansprüche 1 bis 6, dadurch gekennzeichnet, daß auf der Innenseite der Verbindungsflansche (4) zumindest einer Halbschale Dichtungsstreifen (15), z.B. Profildichtungsstreifen aus Gummi, aufweist und von den Verbindungsschrauben (8) durchdrungen sind.

8. Rohrkupplung nach einem der Ansprüche 1 bis 7, dadurch gekennzeichnet, daß die Verbindungsflansche (4) auf ihrer Außenseite adhäsiv befestigte, z.B. aufgeklebte, Verstärkungsleisten (16) aufweisen.

9. Rohrkupplung nach einem der Ansprüche 1 bis 8, dadurch gekennzeichnet, daß die Verbindungsschrauben (8) kopfseitig einen Mehrkantansatz aufweisen.

10. Rohrkupplung nach einem der Ansprüche 1 bis 9, dadurch gekennzeichnet, daß die Sicherungsschellen (5) innenseitige Fixierungsnocken (17) aufweisen.

11. Rohrkupplung nach einem der Ansprüche 1 bis 10, dadurch gekennzeichnet, daß sich die Sicherungsschellen (5) an den Dichtmassemantel (13) anschließen und dadurch der Dichtmassemantel (13) von den Kabeleinführungshülsen (9) und den Sicherungsschellen (5) auf den Kabelschutzrohrenden (6a, 6b) begrenzt ist.

12. Rohrkupplung nach einem der Ansprüche 1 bis 11, dadurch gekennzeichnet, daß zwischen dem Kupplungsrohr (3) und einem oder beiden zu verbindenden Kabelschutzrohrenden (6a, 6b) jeweils eine Reduzierhülse (19a, 19b) einsetzbar ist.

13. Rohrkupplung nach einem der Ansprüche 1 bis 12, dadurch gekennzeichnet, daß zwischen dem Kupplungsrohr (3) und der oder den Reduzierhülsen (19a, 19b) sowie zwischen der oder den Reduzierhülsen (19a, 19b) und dem oder den Kabelschutzrohrenden (6a, 6b) jeweils eine Dichtung, z.B. ein Dichtmassemantel (20) vorgesehen ist.

## Geänderte Patentansprüche

### Geänderte Patentansprüche gemäss Regel 86(2) EPÜ.

1. Rohrkupplung (1) für die Verbindung von zwei Rohren, insbesondere zum Ersetzen eines einem Kabelschutzrohrstrang (2) aus Kunststoffrohren für Nachrichtenkabel im Zuge von Reparaturarbeiten über eine vorgegebene Reparaturlänge entnommenen Kabelschutzrohrabschnitts, mit einem Kupplungsrohr (3) mit einem den Kabelschutzrohraußendurchmesser (Da) um ein vorgegebenes Maß übersteigenden Kupplungsrohrinnendurchmesser (Di), wobei das Kupplungsrohr (3) durch Längsteilung in zwei Halbschalen (3a, 3b) mit randseitigen Verbindungsflanschen (4) unterteilt ist, **dadurch gekennzeichnet**, daß in das Kupplungsrohr (3) Sicherungsschellen (5) mit Fixierungsnocken (17) für zu verbindende Kabelschutzrohrenden (6a, 6b) eingesetzt sind.
2. Rohrkupplung (1) nach Anspruch 1 oder 2, dadurch gekennzeichnet, daß die Verbindungsflansche (4) in vorgegebenen Abständen ebenso wie die Sicherungsschellen (5) fluchtende Durchbrechungen (7) zum Hindurchführen von Verbindungsschrauben (8) aufweisen.
3. Rohrkupplung (1) nach Anspruch 1 oder 2, dadurch gekennzeichnet, daß auf die Kabelschutzrohrenden (6a, 6b) Kabeleinführungshülsen (9) aufsetzbar, z.B. aufspreizbar, sind.
4. Rohrkupplung (1) nach einem der Ansprüche 1 bis 3, dadurch gekennzeichnet, daß die Kabeleinführungshülsen (9) einen stirnseitig gegen die Kabelschutzrohrenden (6a, 6b) anliegenden Anschlagring (10) aufweisen, der eine konische Kabeleinführung (11) besitzt.
5. Rohrkupplung nach einem der Ansprüche 1 bis 4, dadurch gekennzeichnet, daß die Kabeleinführungshülsen (9) einen Längsschlitz (12) aufweisen und aus biegeelastischem Material, z.B. Kunststoff, bestehen.
6. Rohrkupplung nach einem der Ansprüche 1 bis 5, dadurch gekennzeichnet, daß die Kabelschutzrohrenden (6a, 6b) von einem sich an die Kabeleinführungshülsen (9) anschließenden Dichtmassemantel (13) umgeben sind.
7. Rohrkupplung nach einem der Ansprüche 1 bis 6, dadurch gekennzeichnet, daß der Dichtmassemantel (13) aus einem wickelbaren Dichtmasseband vorgegebener Breite mit einem abziehbaren Abdeckpapier (14) besteht.
8. Rohrkupplung nach einem der Ansprüche 1 bis 7, dadurch gekennzeichnet, daß auf der Innenseite der Verbindungsflansche (4) zumindest einer Halbschale Dichtungsstreifen (15), z.B. Profildichtungsstreifen aus Gummi, aufweist und von den Verbindungsschrauben (8) durchdrungen sind.
9. Rohrkupplung nach einem der Ansprüche 1 bis 8, dadurch gekennzeichnet, daß die Verbindungsflansche (4) auf ihrer Außenseite adhäsiv befestigte, z.B. aufgeklebte, Verstärkungsleisten (16) aufweisen.
10. Rohrkupplung nach einem der Ansprüche 1 bis 9, dadurch gekennzeichnet, daß die Verbindungsschrauben (8) kopfseitig einen Mehrkantansatz aufweisen.
11. Rohrkupplung nach einem der Ansprüche 1 bis 10, dadurch gekennzeichnet, daß die Sicherungsschellen (5) innenseitige Fixierungsnocken (17) aufweisen.
12. Rohrkupplung nach einem der Ansprüche 1 bis 11, dadurch gekennzeichnet, daß sich die Sicherungsschellen (5) an den Dichtmassemantel (13) anschließen und dadurch der Dichtmassemantel (13) von den Kabeleinführungshülsen (9) und den Sicherungsschellen (5) auf den Kabelschutzrohrenden (6a, 6b) begrenzt ist.
13. Rohrkupplung nach einem der Ansprüche 1 bis 12, dadurch gekennzeichnet, daß zwischen dem Kupplungsrohr (3) und einem oder beiden zu verbindenden Kabelschutzrohrenden (6a, 6b) jeweils eine Reduzierhülse (19a, 19b) einsetzbar ist.
14. Rohrkupplung (1) nach einem der Ansprüche 1 bis 13, dadurch gekennzeichnet, daß zwischen dem Kupplungsrohr (3) und der oder den Reduzierhülsen (19a, 19b) sowie zwischen der oder den Reduzierhülsen (19a, 19b) und dem oder den Kabelschutzrohrenden (6a, 6b) jeweils eine Dichtung, z.B. ein Dichtmassemantel (20) vorgesehen ist.
